# EUROPÄISCHE PATENTSCHRIFT

(11) **EP 4 499 997 B1**
(45) Veröffentlichungstag und Bekanntmachung des Hinweises auf die Patenterteilung: **04.03.2026**
(21) Anmeldenummer: 23715814.2
(22) Anmeldetag: 28.03.2023
(51) Int. Cl.: F02D 41/22, F02D 41/00, F01N 11/00, F02D 41/02, F02D 41/12, F02D 41/14

(54) **VERFAHREN ZUM ERKENNEN EINER MANIPULATION EINES SENSORWERTES EINES ABGASSENSORS EINER BRENNKRAFTMASCHINE FÜR EIN FAHRZEUG**
METHOD FOR DETECTING A MANIPULATION OF A SENSOR VALUE OF AN EXHAUST GAS SENSOR OF AN INTERNAL COMBUSTION ENGINE FOR A VEHICLE
PROCÉDÉ POUR DÉTECTER UNE MANIPULATION D'UNE VALEUR DE CAPTEUR D'UN CAPTEUR DE GAZ D'ÉCHAPPEMENT D'UN MOTEUR À COMBUSTION INTERNE POUR UN VÉHICULE

(30) Priorität: 31.03.2022 DE 102022203170
(43) Veröffentlichungstag der Anmeldung: 05.02.2025
(73) Patentinhaber: Schaeffler Technologies AG & Co. KG, 91074 Herzogenaurach (DE)
(72) Erfinder: ACHLEITNER, Erwin, 80687 München (DE); RODATZ, Paul, 80687 München (DE); HAFT, Gerhard, 80687 München (DE); NIENHOFF, Michael, 80687 München (DE); PERUGINI, Mattia, 80687 München (DE)
(74) Vertreter: Schaeffler Technologies
(86) Internationale Anmeldenummer: PCT/EP2023/057946
(87) Internationale Veröffentlichungsnummer: WO 2023/186869

(56) Entgegenhaltungen:
- DE-A1- 102019 210 739
- DE-B3- 102008 024 177
- DE-T2- 60 300 545

## Beschreibung

Die Erfindung betrifft ein Verfahren zum Erkennen einer Manipulation eines Sensorwertes eines Abgassensors, insbesondere eines Stickoxidsensors, einer Brennkraftmaschine für ein Fahrzeug. Des Weiteren betrifft die Erfindung eine Brennkraftmaschine für ein Fahrzeug mit einer Funktion zum Erkennen einer Manipulation eines Sensorwertes eines Abgassensors der Brennkraftmaschine.

Abgassensoren, wie zum Beispiel Stickoxidsensoren (NOx-Sensoren), messen eine Abgaskonzentration im Abgas einer Brennkraftmaschine eines Fahrzeugs. Sie werden für die Regelung von SCR (Selective Catalytic Reduction)-Systemen und von LNT (Lean NOx Trap)-Katalysatoren verwendet oder auch in Zukunft für ein OBM (OnBoard Monitoring) der Abgasemission eingesetzt. Es wird aus verschiedenen Gründen immer wieder versucht, die Messwerte der Abgassensoren, insbesondere von NOx-Sensoren, zu verfälschen und somit eine geringere als die tatsächlich vorhandene Abgasemission vorzutäuschen.

Im Internet ist beispielsweise mittlerweile eine Vielzahl von NOx-Sensor-Emulatoren frei zugänglich und erhältlich, welche die Messwerte der NOx-Sensoren verfälschen und einem Steuergerät eine funktionierende Abgasnachbehandlung vortäuschen. Das Ziel dieser Emulatoren ist beispielsweise eine Einsparung eines Reduktionsmittels bei SCR-Katalysatoren oder auch die Vermeidung von Reparaturkosten für die Abgasreinigung. Wegen der vielen möglichen Angriffspunkte, die Abgasnachbehandlung zu umgehen, ist die Auffindung dieser Emulatoren nicht einfach. Eine weitere Möglichkeit zur Fälschung der tatsächlich vorhandenen Emissionswerte besteht darin, die Abgassensoren auszubauen, sodass diese nur Umgebungsluft messen. Des Weiteren kann auch das Schutzrohr der Abgassensoren so modifiziert werden, damit der Abgasmassenstrom nicht an das Sensorelement gelangt.

Nicht alle Modifikationen sind durch die Selbstdiagnose der Abgassensoren, beispielsweise der Stickoxidsensoren, mittels einer sogenannten Gainüberprüfung erkennbar. Eine einfache Überprüfung eines Stickoxidsensors ist zum Beispiel anhand des Vergleichs des linearen Signals der linearen Lambdasonde und des linearen Sauerstoffsignals in einem Stickoxidsensor in der Patentschrift DE 102008024177 B3 beschrieben. Die in der DE 102008024177 B3 beschriebene Methode kann dazu verwendet werden, um anhand einer linearen Lambdasonde und dem linearen Lambdasondensignal des Stickoxidsensors einen ausgebauten Sensor zu erkennen. Wenn allerdings der Sensorwert des Abgassensors, beispielsweise durch einen Emulator, selbst manipuliert wird, kann das nur im System erkannt werden.

Die DE 10 2019 210 739 A1 beschreibt und Abgasbehandlungssystem und ein Verfahren zum Betreiben eines Abgasbehandlungssystems, das einen ersten Stickoxidsensor, der stromaufwärts eines ersten Katalysators angeordnet ist, einen zweiten Stickoxidsensor, der stromabwärts des ersten Katalysators und stromaufwärts eines zweiten Katalysators angeordnet ist, und einen dritten Stickoxidsensor aufweist, der stromabwärts des zweiten Katalysators angeordnet ist. Der erste und der zweite Katalysator sind jeweils zum Speichern eines Reduktionsmittels ausgebildet. Das Verfahren umfasst ein Bereitstellen eines ersten Zustands, in dem der erste Katalysator frei von Reduktionsmittel ist, ein Vergleichen eines ersten Sensorsignals des ersten Stickoxidsensors und eines zweiten Sensorsignals des zweiten Stickoxidsensors, ein Ermitteln eines Sensorfehlers, wenn das erste Sensorsignal und das zweite Sensorsignal mehr als eine vorgegebene Toleranz voneinander abweichen, ein Bereitstellen eines zweiten Zustands, in dem der zweite Katalysator frei von Reduktionsmittel ist, wobei der erste Zustand und der zweite Zustand zeitlich nacheinander bereitgestellt werden, ein Vergleichen eines dritten Sensorsignals des zweiten Stickoxidsensors und eines vierten Sensorsignals des dritten Stickoxidsensors und ein Ermitteln eines Sensorfehlers, wenn das dritte Sensorsignal und das vierte Sensorsignal mehr als eine vorgegebene Toleranz voneinander abweichen.

Es ist daher wünschenswert, ein Verfahren zum Erkennen einer Manipulation eines Sensorwertes eines Abgassensors einer Brennkraftmaschine für ein Fahrzeug anzugeben, das es ermöglicht, eine Manipulation des von dem Abgassensor ausgegebenen Sensorwertes zuverlässig zu erkennen und dabei möglichst wenig Emissionen zu erzeugen.

Ein Verfahren zum sicheren Erkennen einer Manipulation eines Sensorwertes eines Abgassensors einer Brennkraftmaschine für ein Fahrzeug ist im Patentanspruch 1 angegeben.

Das Verfahren ist bei einer Brennkraftmaschine einsetzbar, die eine Steuereinrichtung zum Steuern der Brennkraftmaschine, einen Einlasstrakt mit einer Drosselklappe, eine mit dem Einlasstrakt fluidverbundene Verbrennungskammer und einen mit der Verbrennungskammer fluidverbundenen Abgastrakt mit einem Katalysator aufweist. Der Abgassensor ist in dem Abgastrakt stromabwärts zu dem Katalysator angeordnet.

Gemäß dem Verfahren ist vorgesehen, dass die Brennkraftmaschine zunächst in einem Schubabschneidebetrieb betrieben wird. Bei geschlossener Drosselklappe wird ein erster Sensorwert des Abgassensors ermittelt. Durch die Steuereinrichtung kann zunächst ein Manipulationsverdacht durch Auswerten des ersten Sensorwertes in Abhängigkeit von einem ersten Schwellwert festgestellt werden. Wenn der Manipulationsverdacht festgestellt worden ist, erfolgt das Verifizieren des Manipulationsverdachts durch die Steuereinrichtung, indem ein zweiter Sensorwert des Abgassensors bei einer Emissionserhöhung der Brennkraftmaschine gemessen wird und der zweite Sensorwert in Abhängigkeit von einem zweiten Schwellwert ausgewertet wird.

Erfindungsgemäß wird somit ein zweistufiges Verfahren angewendet. In der ersten Stufe, in der zunächst ein Manipulationsverdacht festgestellt wird, werden keine zusätzlichen Emissionen erzeugt, da die Brennkraftmaschine in einem Schubabschneidebetrieb betrieben wird. Erst wenn sich in der ersten Stufe des Verfahrens ein Verdacht auf eine Manipulation ergibt, wird der Manipulationsverdacht in der zweiten Stufe des Verfahrens unter Emissionserhöhung der Brennkraftmaschine verifiziert. Die Verifizierung kann beispielsweise dadurch erfolgen, indem in der zweiten Stufe des Verfahrens die Spreizung (Gain) des Abgassensorsignals, beispielsweise des NOx-Sensorsignals, überprüft wird.

Gemäß einer vorteilhaften Ausgestaltung des Verfahrens ist vorgesehen, dass in der ersten Stufe des Verfahrens ein Nullpunkt des Abgassensors nach dem Betreiben der Brennkraftmaschine in dem Schubabschneidebetrieb kalibriert wird. Der erste Sensorwert wird in Abhängigkeit von der Kalibrierung des Nullpunktes Abgassensors ermittelt.

Aufgrund von Alterungseffekten und/oder Kontaminierungseffekten kann die Messgenauigkeit des Abgassensors im Laufe der Zeit abnehmen. Durch die vorgeschlagene Kalibrierung kann ein Nullpunkt des Abgassensors, der einem Sensorwert entspricht, wenn im Wesentlichen schadstofffreie, insbesondere stickstoffdioxidfreie, Gase an dem Sensor vorbeiströmen, neu eingestellt werden. Die nachfolgend ermittelten Sensorwerte beziehen sich dann auf den neu erlernten Nullpunkt.

Gemäß einer möglichen Ausführungsform des Verfahrens wird zum Kalibrieren des Nullpunktes des Abgassensors die Drosselklappe zunächst geöffnet. Ein dritter Sensorwert wird nach einem ersten Zeitpunkt nach dem Öffnen der Drosselklappe ermittelt.

Durch das Öffnen der Drosselklappe stellt sich im Ansaugtrakt der Umgebungsdruck ein, wodurch die angesaugte Luftmasse erhöht wird. Da sich die Brennkraftmaschine im Schubabschneidebetrieb, bei dem keine Verbrennung von Kraftstoff erfolgt, befindet, gelangt im Wesentlichen die durch den Einlasstrakt angesaugte Luft durch die Verbrennungskammer in den Abgastrakt, da die Brennkraftmaschine aufgrund der Fahrzeugbewegung geschleppt und bewegt wird. Gleichzeitig bleibt die Beeinflussung durch sogenannte Blow-by-Gase, die durch eine Kurbelgehäuseentlüftungsleitung in den Ansaugtrakt gelangen können, gering.

Nach dem ersten Zeitpunkt nach dem Öffnen der Drosselklappe strömt daher hauptsächlich Umgebungsluft an dem Abgassensor vorbei.

Gemäß einer Weiterbildung des Verfahrens erfolgt das Ermitteln des dritten Sensorwertes durch Berechnen eines Mittelwertes der Sensorwerte des Abgassensors zwischen dem ersten Zeitpunkt und einem zweiten Zeitpunkt nach dem ersten Zeitpunkt. Durch die Mittelwertbildung können Fehler bei der Nullpunktbestimmung minimiert werden.

Gemäß einer Ausführungsform des Verfahrens ist vorgesehen, dass zum Ermitteln des ersten Sensorwertes des Abgassensors in der ersten Stufe des Verfahrens die Drosselklappe zu einem dritten Zeitpunkt nach dem zweiten Zeitpunkt wieder geschlossen wird. Nach einer Zeitdauer nach dem Schließen der Drosselklappe wird ein vierter Sensorwert ermittelt.

Durch das Schließen der Drosselklappe wird das Verhältnis von Blow-by-Gasen zur Frischluft im Abgastrakt der Brennkraftmaschine erhöht. Somit strömt ein hoher Anteil von Blow-by-Gasen aus einem Kurbelgehäuse der Brennkraftmaschine durch die Kurbelgehäuseentlüftung in den Ansaugtrakt und von dort wegen der Schleppbewegung des Motors in den Abgastrakt. Folglich steigen die Stickstoffemissionen im Abgastrakt nach dem Schließen der Drosselklappe wieder an. Wenn keine Manipulation des Abgassensors erfolgt ist, muss der ermittelte vierte Sensorwert den Anstieg der Stickstoffemissionen anzeigen.

Gemäß einer vorteilhaften Ausführungsform des Verfahrens wird der vierte Sensorwert durch Berechnen eines Mittelwertes der Sensorwerte des Abgassensors zwischen einem vierten Zeitpunkt nach dem dritten Zeitpunkt und einem fünften Zeitpunkt nach dem vierten Zeitpunkt berechnet. Durch die Mittelwertbildung werden Fehler bei dem Ermitteln des vierten Sensorwertes minimiert. Gemäß einer weiteren Ausführungsform des Verfahrens wird der erste Sensorwert durch Berechnen einer Differenz zwischen dem vierten Sensorwert und dem dritten Sensorwert ermittelt. Durch Auswertung der Differenz zwischen dem vierten Sensorwert und dem dritten Sensorwert kann ein Verdacht auf eine mögliche Sensormanipulation festgestellt werden.

Gemäß einer Ausführungsform des Verfahrens wird der Manipulationsverdacht durch die Steuereinrichtung festgestellt, wenn von der Steuereinrichtung ermittelt wird, dass der erste Sensorwert unter dem ersten Schwellwert liegt. Da der erste Sensorwert der zuvor berechneten Differenz zwischen dem vierten Sensorwert und dem dritten Sensorwert entspricht, wird ein Manipulationsverdacht durch die Steuereinrichtung festgestellt, wenn die Differenz zwischen dem vierten Sensorwert und dem dritten Sensorwert kleiner als der erste Schwellwert ist.

Wenn der Manipulationsverdacht durch die Steuereinrichtung festgestellt wird, wird die zweite Stufe des Verfahrens ausgeführt, in der der Manipulationsverdacht verifiziert wird.

Gemäß einer möglichen Ausführungsform des Verfahrens wird zum Verifizieren des Manipulationsverdachts der Schubabschneidebetrieb der Brennkraftmaschine zu einem sechsten Zeitpunkt nach dem fünften Zeitpunkt beendet. Die Brennkraftmaschine wird nach dem sechsten Zeitpunkt mit einem mageren Verbrennungsluftverhältnis betrieben. Der zweite Sensorwert wird gemäß dieser Ausführungsform des Verfahrens zu einem siebten Zeitpunkt nach dem sechsten Zeitpunkt gemessen. Der Manipulationsverdacht wird verifiziert, wenn von der Steuereinrichtung festgestellt wird, dass der zweite Sensorwert unter dem zweiten Schwellwert liegt.

Zum siebten Zeitpunkt werden die Rohemissionen der Brennkraftmaschine gemessen, da der Katalysator mager betrieben wird und mit Sauerstoff gesättigt ist. Es findet somit keine NOx-Konvertierung im Katalysator statt. Daher muss bei fehlerfreiem Sensor das zweite Sensorsignal zum siebten Zeitpunkt über dem zweiten Schwellwert liegen. Liegt der zweite Sensorwert hingegen unter dem zweiten Schwellwert, wird die Manipulation des Abgassensors von der Steuereinrichtung festgestellt.

Gemäß einer anderen Ausführungsform des Verfahrens wird zum Verifizieren des Manipulationsverdachts ein Integral über einen Verlauf des zweiten Sensorwertes ausgewertet. Nachdem in der ersten Stufe des Verfahrens ein Manipulationsverdacht festgestellt worden ist, wird zum Verifizieren des Manipulationsverdachts zunächst der Schubabschneidebetrieb der Brennkraftmaschine zu einem sechsten Zeitpunkt nach dem fünften Zeitpunkt beendet. Die Brennkraftmaschine wird nach dem sechsten Zeitpunkt mit einem mageren Verbrennungsluftverhältnis betrieben. Der zweite Sensorwert wird ab einem siebten Zeitpunkt nach dem sechsten Zeitpunkt gemessen und es wird ein Integral über einen Verlauf des zweiten Sensorwerts zwischen dem sechsten Zeitpunkt und dem siebten Zeitpunkt ermittelt. Der Manipulationsverdacht wird verifiziert, wenn von der Steuereinrichtung festgestellt wird, dass ein Wert des Integrals unter dem zweiten Schwellwert liegt.

Bei dieser Ausführungsform des Verfahrens wird das Sensorsignal des Abgassensors nicht zu einem bestimmten Zeitpunkt ausgewertet, sondern es wird ein Integral des Sensorsignals über einen Zeitraum hinweg ausgewertet. Dadurch wird die Messung unabhängiger von Rauschsignalen.

Bei den zuvor beschriebenen Verfahrensvarianten zum Verifizieren des Manipulationsverdachts wird mit dem zweiten Sensorwert eine Stickstoffkonzentration in dem Abgastrakt ermittelt. Ein Ausräumen des Katalysators nach dem Beenden des Schubabschneidens wird bewusst verzögert, bis das Verifizieren des Manipulationsverdachts beendet ist. Der Katalysator bleibt somit auch nach Beenden des Schubabschneidebetriebs der Brennkraftmaschine mit Sauerstoff gesättigt. Daher findet keine Stickstoffoxidkonvertierung im Katalysator statt, sodass bei unmanipuliertem Sensor der zweite Sensorwert beziehungsweise das Integral über den NOx-Verlauf des zweiten Sensorwerts über einem Schwellwert liegen muss.

Gemäß einer anderen Ausführungsform des Verfahrens wird zum Verifizieren des Manipulationsverdachts zunächst der Schubabschneidebetrieb der Brennkraftmaschine zu einem sechsten Zeitpunkt nach dem fünften Zeitpunkt beendet. Allerdings wird das Ausräumen des Katalysators nicht verzögert, sondern der Katalysator wird durch Spülen des Katalysators für eine Zeitdauer, die größer als eine notwendige Zeitdauer zum Verbrauchen des in dem Katalysator vorhandenen Sauerstoffs ist, ausgeräumt. Die Brennkraftmaschine wird nach dem sechsten Zeitpunkt mit einem fetten Verbrennungsluftverhältnis betrieben. Zu einem siebten Zeitpunkt nach dem sechsten Zeitpunkt wird der zweite Sensorwert gemessen. Der Manipulationsverdacht wird verifiziert, wenn von der Steuereinrichtung festgestellt wird, dass der zweite Sensorwert unter dem zweiten Schwellwert liegt.

Während bei den zuvor beschriebenen Ausführungsformen zum Verifizieren des Manipulationsverdachts die von dem Abgassensor ermittelte Stickoxidkonzentration (NOx-Konzentration) im Abgas ausgewertet wird, wird bei der zuletzt angegebenen Ausführungsform des Verfahrens zum Verifizieren des Manipulationsverdachts eine Ammoniak-Konzentration (NH3-Konzentration) im Abgas gemessen und ausgewertet. Wird der Katalysator mit geleertem Sauerstoffspeicher im fetten Betriebsbereich betrieben, entsteht Ammoniak, wobei die Ammoniak-Konzentration vom Lambda, der Temperatur und des Alterungszustandes des Katalysators abhängig ist. Der Abgassensor, insbesondere ein NOx-Abgassensor, hat eine Querempfindlichkeit zu Ammoniak. Wenn der Katalysator in einem Betriebsbereich betrieben wird, in dem Ammoniak entsteht, muss der Abgassensor diese Konzentration im Abgasstrom anzeigen.

Eine Ausführungsform einer Brennkraftmaschine für ein Fahrzeug mit Erkennen einer Manipulation eines Sensorwertes eines Abgassensors ist im Patentanspruch 15 angegeben. Die Brennkraftmaschine umfasst eine Steuereinrichtung zum Steuern der Brennkraftmaschine, einen Einlasstrakt mit einer Drosselklappe, eine mit dem Einlasstrakt fluidverbundene Verbrennungskammer und einen mit der Verbrennungskammer fluidverbundenen Abgastrakt mit einem Katalysator. Der Abgassensor ist in dem Abgastrakt stromabwärts zu dem Katalysator angeordnet. Die Steuereinrichtung ist dazu ausgebildet, das oben beschriebene Verfahren zum Erkennen einer Manipulation eines Sensorwertes des Abgassensors durchzuführen.

Eine derartige Brennstoffkraftmaschine ermöglicht das Feststellen eines Verdachts einer Manipulation eines Sensorwertes eines Abgassensors in einer ersten Stufe, ohne dass von der Brennstoffkraftmaschine zusätzliche Emissionen erzeugt werden. Erst wenn sich ein Verdacht auf eine Manipulation des Sensorwertes des Abgassensors herausstellt, erfolgt in einer zweiten Stufe des von der Steuereinrichtung ausgeführten Verfahrens eine Verifizierung des Manipulationsverdachts durch das Erzeugen von zusätzlichen Emissionen.

Die Erfindung wird im Folgenden anhand von Figuren, die Ausführungsformen der Erfindung zeigen, näher erläutert. Es zeigen:
Figur 1 eine schematische Ansicht einer Brennkraftmaschine eines Fahrzeugs,
Figur 2 ein Ablaufdiagramm einer ersten Stufe eines erfindungsgemäßen Verfahrens zum Erkennen einer Manipulation eines Sensorwertes eines Abgassensors einer Brennkraftmaschine,
Figur 3 Signalverläufe zum Verdeutlichen der ersten Stufe des Verfahrens zum Erkennen einer Manipulation eines Sensorwertes eines Abgassensors einer Brennkraftmaschine,
Figur 4 eine erste Ausführungsform einer zweiten Stufe des Verfahrens zum Erkennen einer Manipulation eines Sensorwertes eines Abgassensors einer Brennkraftmaschine,
Figur 5 Signalverläufe zum Verdeutlichen der ersten Ausführungsform der zweiten Stufe des Verfahrens zum Erkennen einer Manipulation eines Sensorwertes eines Abgassensors einer Brennkraftmaschine,
Figur 6 eine weitere Ausführungsform einer zweiten Stufe eines Verfahrens zum Erkennen einer Manipulation eines Sensorwertes eines Abgassensors einer Brennkraftmaschine, und
Figur 7 Signalverläufe zum Verdeutlichen der weiteren Ausführungsform der zweiten Stufe des Verfahrens zum Erkennen einer Manipulation eines Sensorwertes eines Abgassensors einer Brennkraftmaschine.

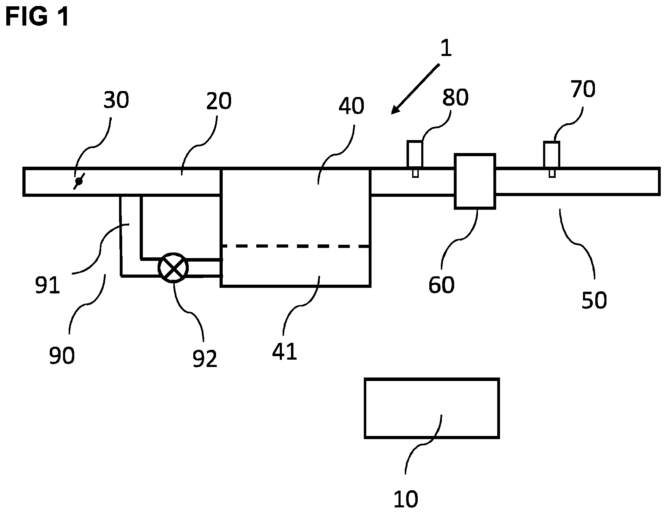

Figur 1 zeigt eine schematische Ansicht einer Brennkraftmaschine 1 für ein Fahrzeug, die eine Funktionalität zum Erkennen einer Manipulation eines Sensorwertes eines Abgassensors 70, insbesondere eines Stickoxidsensors (NOx-Sensors) aufweist. Die Brennkraftmaschine 1 umfasst eine Steuereinrichtung 10 zum Steuern der Brennkraftmaschine und ihrer Komponenten. Weiterhin weist die Brennkraftmaschine 1 einen Einlasstrakt 20, beispielsweise ein Ansaugrohr, auf, in dem eine Drosselklappe 30 angeordnet ist. Mit dem Einlasstrakt 20 fluidverbunden ist eine Verbrennungskammer 40 mit Zylindern, in denen sich Kolben bewegen. Die Kolben sind zumindest teilweise in einem Kurbelgehäuse 41 angeordnet und darin mit einer Kurbelwelle mechanisch gekoppelt. Über den Einlasstrakt 20 kann Ansaugluft in die Verbrennungskammer 40 gelangen, in der die Ansaugluft mit Kraftstoff vermischt und verbrannt wird.

Die Brennkraftmaschine 1 umfasst des Weiteren einen Abgastrakt 50, der mit der Verbrennungskammer 40 fluidverbunden ist. In dem Abgastrakt 50 ist ein Katalysator 60 und stromabwärts zu dem Katalysator 60 der Abgassensor 70, insbesondere ein Stickoxidsensor, angeordnet. Zwischen der Verbrennungskammer 40 und dem Katalysator 60 kann eine Lambdasonde 80 in dem Abgastrakt 50 angeordnet sein.

Während dem Betrieb der Brennkraftmaschine 1 gelangen Abgase aus den Zylindern der Verbrennungskammer 40 in das Kurbelgehäuse 41. Um diese sogenannten Blow-by-Gase nicht unbehandelt in die Atmosphäre auszustoßen, ist eine Entlüftungsvorrichtung 90 mit einer Entlüftungsleitung 91 vorgesehen, die das Kurbelgehäuse 41 mit dem Einlasstrakt 20 verbindet. Die Entlüftungsvorrichtung 90 umfasst des Weiteren ein Entlüftungsventil 92, mit dem die Entlüftung des Kurbelgehäuses 41 in den Einlasstrakt 20 gesteuert werden kann.

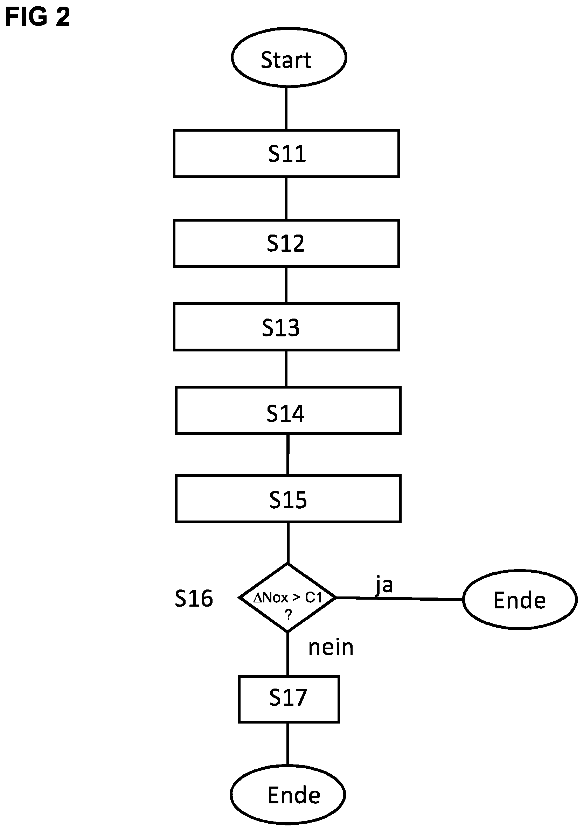

Im Folgenden wird ein Verfahren zum Erkennen einer Manipulation eines Sensorwertes des Abgassensors 70, insbesondere eines Stickoxidsensors, anhand der Figuren 2 bis 6 näher erläutert. Nox(t) bezeichnet im Folgenden eine Stickoxidkonzentration zum Zeitpunkt t, und NH3 (t) bezeichnet eine Ammoniakkonzentration zum Zeitpunkt t. Die einzelnen Verfahrensschritte sowie die Steuerung der dazu notwendigen Komponenten der Brennkraftmaschine 1 erfolgt mittels der Steuereinrichtung 10. Das

Das Verfahren weist einen zweistufigen Verfahrensablauf auf. In der ersten Stufe des Verfahrens wird von der Steuereinrichtung 10 zunächst überprüft, ob ein Manipulationsverdacht vorliegt. Dazu wird die Brennkraftmaschine 1 in einem Schubabschneidebetrieb betrieben. In dem Schubabschneidebetrieb der Brennkraftmaschine erfolgt eine beabsichtigte, temporäre Unterbrechung der Kraftstoffzufuhr in die Brennkraftmaschine, wenn diese keine Leistung abgeben soll, sondern durch die in Schwung befindliche Fahrzeugmasse geschleppt wird. Da die Brennkraftmaschine aufgrund der Fahrzeugbewegung geschleppt und bewegt wird, gelangt die durch den Einlasstrakt 20 angesaugte Luft durch die Verbrennungskammer 40 in den Abgastrakt 50.

In diesem sogenannten Schubbetrieb der Brennkraftmaschine wird ein erster Sensorwert ΔNOx des Abgassensors 70 bei geschlossener Drosselklappe 30 ermittelt. Bei geschlossener Drosselklappe gelangen Blow-by-Gase aus dem Kurbelgehäuse 41 durch die Kurbelgehäuseentlüftungsleitung 91 in den Einlasstrakt 20 der Brennkraftmaschine. Somit wird das Verhältnis von Blow-by-Gasen zur Frischluft erhöht. Durch die Schleppbewegung des Motors gelangen die Blow-by-Gase von dem Einlasstrakt 20 durch die Verbrennungskammer 40 in den Abgastrakt 50 und strömen dort an dem Abgassensor/NOx-Sensor 70 vorbei.

Bei einem nicht-manipulierten Abgassensor 70 müsste der ermittelte erste Sensorwert ΔNOx einen Anstieg der Stickoxidkonzentration anzeigen. In der ersten Stufe des Verfahrens kann somit durch Auswerten des Sensorwertes ΔNOx in Abhängigkeit von einem Schwellwert C1 durch die Steuereinrichtung 10 ein Manipulationsverdacht festgestellt werden. Der Manipulationsverdacht wird insbesondere dann festgestellt, wenn der ausgewertete Sensorwert ΔNOx unter dem Schwellwert C1 liegt.

In der zweiten Stufe des Verfahrens erfolgt dann ein Verifizieren des Manipulationsverdachts durch die Steuereinrichtung 10. Die zweite Stufe des Verfahrens beruht auf einer Gain-Überprüfung des (Nox-)Abgassensors 70 mit Emissionserhöhung der Brennkraftmaschine, wenn in der ersten Verfahrensstufe ein Verdacht auf Manipulation festgestellt worden ist.

Dazu wird der Schubabschneidebetrieb der Brennkraftmaschine beendet und der Motor im Normalbetrieb betrieben. Im Normalbetrieb wird der Brennkraftmaschine Kraftstoff und Frischluft zugeführt und das Kraftstoffluftgemisch in der Verbrennungskammer 40 verbrannt. In der zweiten Stufe des Verfahrens werden somit im Gegensatz zur ersten Stufe, in der keine zusätzlichen Emissionen erzeugt worden sind, die Emissionen der Brennkraftmaschine erhöht. In der zweiten Stufe des Verfahrens wird bei Emissionserhöhung der Brennkraftmaschine ein Sensorwert NOx(t2') beziehungsweise NH3(t2') gemessen.

Wie unten noch näher erläutert wird, kann es sich bei dem in der zweiten Stufe des Verfahrens gemessenen Sensorwert um eine Stickoxid-Konzentration NOx(t2') oder um eine Ammoniakkonzentration NH3(t2') handeln. Durch Auswerten des gemessenen Sensorwertes NOx(t2') beziehungsweise NH3(t2') in Abhängigkeit von einem zweiten Schwellwert C2 kann ein zuvor festgestellter Manipulationsverdacht von der Steuereinrichtung 10 verifiziert werden. Eine Manipulation liegt insbesondere dann vor, wenn der gemessene zweite Sensorwert NOx(t2') beziehungsweise NH3(t2') unter dem zweiten Schwellwert C2 liegt.

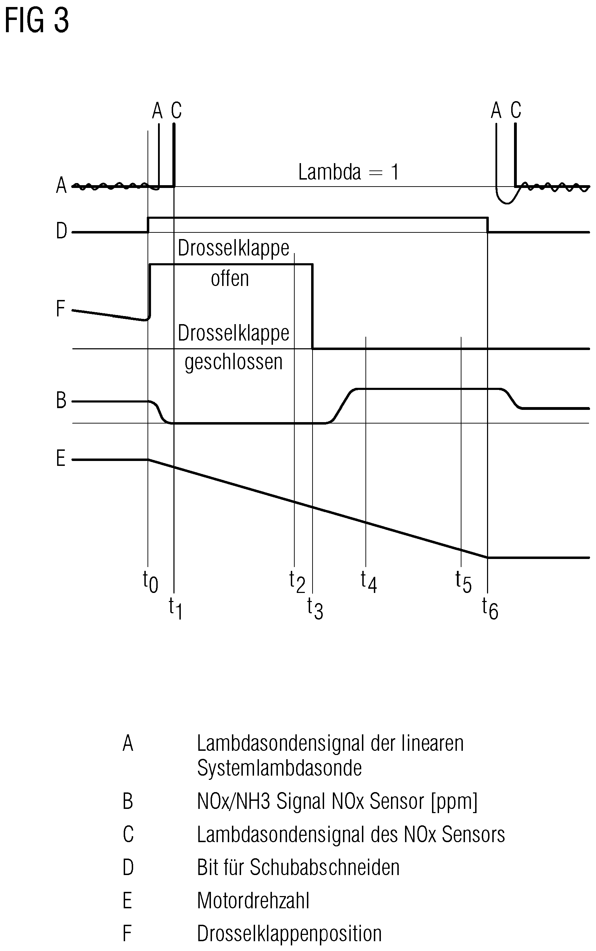

Im Folgenden werden die einzelnen Verfahrensschritte des zweistufigen Verfahrens näher betrachtet. Figur 2 stellt die Verfahrensschritte während der ersten Stufe des Verfahrensablaufs dar. Die verschiedenen Zeitpunkte sind in Figur 3 dargestellt.

Nach dem Starten des Verfahrens wird die Brennkraftmaschine in einem Schritt S11 zu einem Zeitpunkt t0 (Figur 3) von der Steuereinrichtung 10 zunächst von einem Normalbetrieb in den Schubabschneidebetrieb geschaltet und dort weiter betrieben. Der Schubabschneidebetrieb beschreibt einen Betriebszustand der Brennkraftmaschine, bei dem keine Verbrennung von Kraftstoff erfolgt. Stattdessen wird die Brennkraftmaschine aufgrund der Fahrzeugbewegung geschleppt und bewegt, sodass die durch den Einlasstrakt 20 angesaugte Luft durch die Verbrennungskammer 40 in den Abgastrakt 50 strömt.

Um die weiteren Verfahrensschritte auszuführen, wird im Verfahrensschritt S11 des Weiteren von der Steuereinrichtung 110 überprüft, ob sich die Geschwindigkeit des Fahrzeugs über einen Schwellwert, beispielsweise über einen Schwellwert von 50 km/h und die Motordrehzahl über einen weiteren Schwellwert, beispielsweise über 1800 Umdrehungen pro Minute, befindet. Nur wenn diese Bedingungen erfüllt sind, ist sichergestellt, dass die weiteren Verfahrensschritte vor einem Stillstand des Fahrzeugs ausgeführt werden können und nicht durch Wiedereinsetzen des Normalbetriebs der Brennkraftmaschine, das heißt einer Kraftstoffzufuhr mit Verbrennung des Kraftstoffluftgemischs, nach dem Schubabschalten abgebrochen werden. Bei Anordnung des Abgassensors 70 im Abgastrakt 50 nach einem Gaspartikelfilter wird zusätzlich im Verfahrensschritt S11 überprüft, ob die Temperatur des Gaspartikelfilters kleiner als ein Schwellwert, beispielsweise kleiner als 550 °C, ist, um Rußoxidation zu vermeiden.

Im Verfahrensschritt S12 erfolgt zum Zeitpunkt t1 (Figur 3) ein Kalibrieren des Abgassensors, indem ein Nullpunkt des Abgassensors nach dem Betreiben der Brennkraftmaschine in dem Schubabschneidebetrieb ermittelt wird (Nullpunktsadaption). Dadurch kann eine Signalverschiebung des Sensorsignals des Abgassensors 70, die von Alterungseffekten und/oder Kontaminierungseffekten des Abgassensors herrührt, kompensiert werden. Der Abgassensor 70 wird somit im Verfahrensschritt S12 in Bezug auf seinen tatsächlichen Nullpunkt kalibriert. Der Sensorwert ΔNOx kann somit später in Abhängigkeit von der Kalibrierung des Nullpunkts des Abgassensors 70 fehlerkompensiert ermittelt werden.

Zum Kalibrieren des Nullpunkts des Abgassensors 70 wird im Verfahrensschritt S12 die Drosselklappe 30 zum Zeitpunkt t1 geöffnet, damit sich Umgebungsdruck im Einlasstrakt beziehungsweise Saugrohr 20 einstellt und die angesaugte Luftmasse erhöht wird. Zu dem Zeitpunkt t1 beziehungsweise nach einer Zeitdauer t1 nach dem Öffnen der Drosselklappe 30 zum Zeitpunkt t0 kann davon ausgegangen werden, dass an dem Abgassensor 70 durch die Schleppbewegung des Motors sicher Frischluft angekommen ist und sich das Sensorsignal des Abgassensors 70 stabilisiert hat. Typische Werte einer Zeitdauer vom Einschalten des Schubbetriebs zum Zeitpunkt t0 bis zum Zeitpunkt t1 liegen bei zirka 3-5 Sekunden und sind vom Volumen der Abgasanlage abhängig.

Nach dem Öffnen der Drosselklappe 30 wird ein Sensorwert NOx(t2-t1) nach dem Zeitpunkt t1 ermittelt. Der Sensorwert NOx(t2-t1) wird vorzugsweise durch Berechnen eines Mittelwertes der Sensorwerte des Abgassensors 70 zwischen dem Zeitpunkt t1 und einem Zeitpunkt t2 nach dem Zeitpunkt t1 berechnet. Während dieser Zeit strömt hauptsächlich Umgebungsluft an dem Abgassensor 70 vorbei. Der Sensorwert NOx(t2-t1) entspricht dem tatsächlichen Nullpunkt des Abgassensors 70, der nun von der Steuereinrichtung 10 gelernt wird. Wenn der Mittelwert des neu eingelernten Nullpunkts des Sensorsignals des Abgassensors 70 größer als die Toleranz des Sensors ist, beispielsweise 10 ppm, ist die Nullpunktsadaption unplausibel und wird nicht durchgeführt. Unplausible Adaption kann durch Verbrennen von Öl oder durch Oxidation von Ruß entstehen.

Nach dem Kalibrieren des Abgassensors 70 wird die Drosselklappe 30 im Verfahrensschritt S13 zu einem Zeitpunkt t3 nach dem Zeitpunkt t2 geschlossen. Während die Beeinflussung des Abgassensors 70 durch Blow-by-Gase beim Kalibrieren des Nullpunkts beziehungsweise der Nullpunktsadaption durch die geöffnete Drosselklappe gering ist, wird das Verhältnis von Blow-by-Gasen zu Frischluft durch das Schließen der Drosselklappe 30 zum Zeitpunkt t3 erhöht. Dadurch strömt ein hoher Anteil von Blow-by-Gasen vom Kurbelgehäuse 41 durch die Kurbelgehäuseentlüftungsleitung 91 in den Einlasstrakt 20 und von dort wegen der Schleppbewegung des Motors in den Abgastrakt 50.

Zu einem Zeitpunkt t4 nach dem Schließen der Drosselklappe 30 und dem Abwarten einer Gaslaufzeit muss der Abgassensor 70, wenn er nicht manipuliert worden ist, erhöhte Stickstoffkonzentrationen anzeigen. Zum beziehungsweise nach dem Zeitpunkt t4 nach dem Schließen der Drosselklappe 30 wird daher der Sensorwert des Abgassensors 70 in einem Verfahrensschritt S14 von der Steuereinrichtung 10 erneut ermittelt. Gemäß einer bevorzugten Ausführungsform des Verfahrens wird dieser Sensorwert NOx (t4-t5) im Verfahrensschritt S14 ermittelt, indem ein Mittelwert der Sensorwerte des Abgassensors 70 zwischen dem Zeitpunkt t4 und einem nachfolgenden Zeitpunkt t5 berechnet wird.

In einem Verfahrensschritt S15 wird der Sensorwert ΔNOx durch Berechnen einer Differenz zwischen dem Sensorwert NOx(t4-t5) und dem während der Nullpunktsadapation beziehungsweise Kalibrierung des Abgassensors ermittelten Sensorwerts NOx(t2-t1) von der Steuereinrichtung 10 ermittelt (ΔNOx = NOx(t5-t4) - NOx(t2-t1)).

Wenn der Abgassensor 70 nicht manipuliert worden ist, muss der Sensorwert ΔNOx größer als ein Schwellwert sein. Daher wird im Verfahrensschritt S16 von der Steuereinrichtung 10 überprüft, ob der Sensorwert ΔNOx größer einem Schwellwert C1 ist (ΔNOx > C1?). Wenn von der Steuereinrichtung 10 ermittelt wird, dass der Sensorwert ΔNOx größer als der Schwellwert C1 ist, besteht kein Verdacht, dass der Sensorwert, insbesondere der NOx-Sensorwert, des Abgassensors 70 manipuliert wurde und das Verfahren wird beendet. Wenn hingegen von der Steuereinrichtung 10 ermittelt wird, dass der Sensorwert ΔNOx unter dem Schwellwert C1 liegt, wird durch die Steuereinrichtung 10 im Verfahrensschritt S16 ein Manipulationsverdacht festgestellt.

Wenn der Manipulationsverdacht festgestellt worden ist, wird die zweite Stufe des Verfahrens, in der der Manipulationsverdacht verifiziert wird, im Verfahrensschritt S17 ausgeführt. Danach ist das Verfahren beendet.

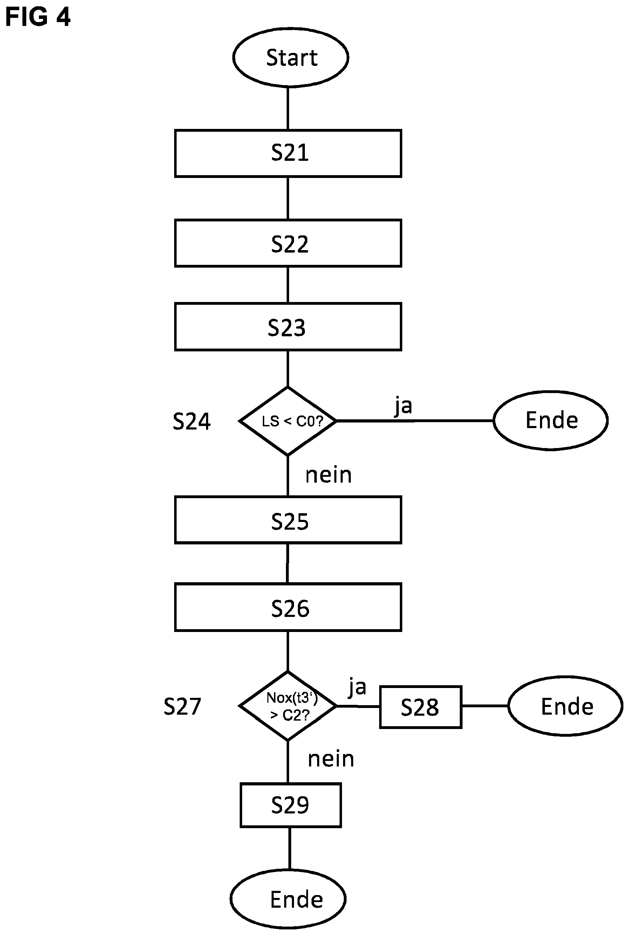

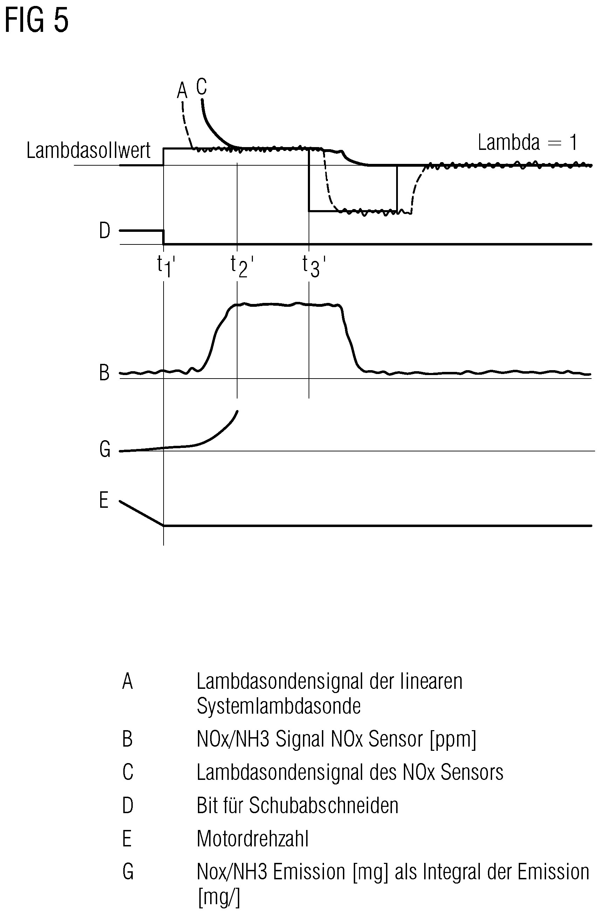

Im Folgenden werden verschiedene Ausführungsvarianten für die zweite Stufe des Verfahrens zum Verifizieren des Manipulationsverdachts anhand der Figuren 4 bis 6 näher erläutert. Die einzelnen Zeitpunkte für die Verfahrensschritte sind der Figur 3 und insbesondere der Figur 5 zu entnehmen. Die in Figur 5 gezeigten Zeitpunkte t1', t2' und t3' liegen zeitlich nach dem Zeitpunkt t6 der Figur 3.

Das Verifizieren des Manipulationsverdachts, der im Verfahrensschritt S16 in der ersten Stufe des Verfahrens festgestellt worden ist, erfolgt in der zweiten Stufe des Verfahrens mit Emissionserhöhung der Brennkraftmaschine, während die erste Stufe des Verfahrens durch das Betreiben der Brennkraftmaschine im Schubabschneidebetrieb ohne Emission stattgefunden hat. Das Verifizieren des Manipulationsverdachts erfolgt, wenn im Verfahrensschritt S16 der ersten Stufe des Verfahrens von der Steuereinrichtung 10 festgestellt worden ist, dass die Bedingung ΔNOx = NOx (t5-t4) - NOx (t2-t1) < C1 erfüllt ist. Das Verifizieren des Manipulationsverdachts kann dann beispielsweise beim Erreichen einer Wiedereinsetzdrehzahl in den Leerlauf der Brennkraftmaschine zum Zeitpunkt t6 (Figur 3) nach dem Schubabschneiden erfolgen.

Gemäß dem in Figur 4 gezeigten Ablauf für die zweite Verfahrensstufe wird nach dem Start der zweiten Stufe des Verfahrens der Schubabschneidebetrieb der Brennkraftmaschine 1 zu einem Zeitpunkt t1' (Figur 5) nach dem Zeitpunkt t5 beziehungsweise t6 (Figur 3) beendet. Die Brennkraftmaschine wird somit wieder im Normalbetrieb mit Kraftstoffzufuhr und Verbrennung des Kraftstoffluftgemisches betrieben. Im Leerlauf sind die NOx-Emissionen noch niedrig und auch der Massendurchsatz ist klein.

In einem Verfahrensschritt S22 wird die sonst unmittelbar nach dem Beenden des Schubabschneidens ablaufende Funktion des Katalysatorausräumens, bei der der im Katalysator gespeicherte Sauerstoff durch einen kurzen fetten Motorbetrieb ausgetrieben wird, bewusst und absichtlich verzögert. Das Ausräumen des Katalysators 60 wird solange verzögert, bis das Verifizieren des Manipulationsverdachts zum Zeitpunkt t3' (Figur 5) beendet ist.

In einem Verfahrensschritt S23 wird ein Sensorwert einer Lambdasonde 80, die stromaufwärts von dem Katalysator 60 angeordnet ist, und/oder das Lambdasignal des Abgassensors 70 zu dem Zeitpunkt t1' gemessen. Das Lambdasignal der Lambdasonde 80 vor dem Katalysator 60 und/oder das Lambdasignal des Abgassensors beziehungsweise NOx-Sensors 70 müssen mager beziehungsweise größer als ein Schwellwert C0 sein.

Wenn daher im Verfahrensschritt S24 von der Steuereinrichtung 10 festgestellt wird, dass der Sensorwert LS der Lambdasonde 80 und/oder ein Lambdawert LS des Abgassensors 70 unter einem Schwellwert C0 liegt, wird das Verifizieren des Manipulationsverdachts beendet. Dies bedeutet, wenn das Lambdasignal der Lambdasonde 80 beziehungsweise das Lambdasignal des Abgassensors 70 einen nicht mageren Betriebszustand anzeigt, wird die Funktion des Verifizierens des Manipulationsverdachts nicht ausgeführt, da die Brennkraftmaschine zu kurz im Schubabschneidebetrieb war und damit der Katalysator 60 nicht mit Sauerstoff gesättigt wurde.

Wenn im Verfahrensschritt S24 festgestellt wird, dass der Sensorwert beziehungsweise das Lambdasignal LS der Lambdasonde 80 und/oder der Sensorwert beziehungsweise Lambdawert LS des Abgassensors 70 zu dem Zeitpunkt t1' mager ist, wird die Brennkraftmaschine 1 nach dem Zeitpunkt t1' im Verfahrensschritt S25 mit einem mageren Kraftstoffluftverhältnis betrieben. Dazu kann ein Lambdasollwert zum Zeitpunkt t1' auf mager, zum Beispiel auf 1,06, eingestellt werden. In einem nachfolgenden Verfahrensschritt S26 wird ein Sensorwert NOx(t3') des Abgassensors 70 zu einem Zeitpunkt t3' nach dem Zeitpunkt t1' gemessen. Da der Katalysator 60 mager betrieben wird und mit Sauerstoff gesättigt ist, werden zum Zeitpunkt t3' die Rohemissionen der Brennkraftmaschine gemessen. Es findet keine Stickstoffoxidkonvertierung im Katalysator 60 statt. Wenn der gemessene Sensorwert NOx(t3') des Abgassensors 70 daher zum Zeitpunkt t3' nicht über einen bestimmten Schwellwert, von beispielsweise 300 ppm, liegt, kann davon ausgegangen werden, dass der Abgassensor beziehungsweise NOx-Sensor 70 manipuliert worden ist. Der Schwellwert von beispielsweise 300 ppm ist vom jeweiligen Motor abhängig, insbesondere vom Verdichtungsverhältnis, vom Zündzeitpunkt, von einer internen Abgasrückführung, etc. und stellt die Rohemission im Leerlauf dar.

In einem Verfahrensschritt S27 wird daher von der Steuereinrichtung 10 überprüft, ob der Sensorwert NOx(t3') zu dem Zeitpunkt t3' über einem Schwellwert C2 liegt. Wenn die Steuereinrichtung 10 feststellt, dass der Sensorwert NOx(t3') über dem Schwellwert C2 liegt, hat sich der Manipulationsverdacht nicht erhärtet, was von der Steuereinrichtung 10 im Verfahrensschritt S28 festgestellt wird. Wenn hingegen von der Steuereinrichtung 10 im Verfahrensschritt S27 festgestellt wird, dass der Sensorwert NOx(t3') des Abgassensors 70 unter dem Schwellwert C2 liegt, verifiziert die Steuereinrichtung 10 den Manipulationsverdacht im Verfahrensschritt S29, womit die zweite Stufe des Verfahrens zum Erkennen einer Manipulation der Sensorwerte des Abgassensors 70 beendet ist.

Zum Beenden des Verfahrens wird ein Lambdawert des Abgassensors 70 nach dem Zeitpunkt t2' gemessen. Wenn von der Steuereinrichtung 10 festgestellt wird, dass der Lambdawert den Lambdasollwert erreicht oder unterschritten hat, wird das Verifizieren des Manipulationsverdachts durch die Steuereinrichtung 10 nach dem Verfahrensschritt S28 beziehungsweise S29 beendet. Anschließend erfolgt ein Spülen des Katalysators 60 durch kurzzeitig fetten Betrieb der Brennkraftmaschine 1, um den in dem Katalysator gespeicherten Sauerstoff zu verbrauchen. Nachfolgend wird die Brennkraftmaschine in einem stöchiometrischen Betrieb betrieben.

Bei dem in Figur 5 gezeigten Beispiel für die zweite Verfahrensstufe, in der der Manipulationsverdacht verifiziert wird, erreicht das Sensor- beziehungsweise Lambdasignal NOx(t3') des Abgassensors 70 den Lambdasollwert zum Zeitpunkt t3'. Spätestens zum Zeitpunkt t3' wird das Verifizieren des Manipulationsverdachts beziehungsweise die Gainüberprüfung des Abgassensors 70 beendet und die Spülfunktion des Katalysators 60 gestartet. Dies erfolgt wie nach einem normalen Schubabschneidebetrieb durch kurzen fetten Lambdabetrieb des Motors, um den gespeicherten Sauerstoff im Katalysator möglichst schnell zu verbrauchen und damit wieder die Stickstoffoxidkonvertierung zu ermöglichen. Die Spülfunktion erfolgt in dem gezeigten Beispiel mit λ = 0,9, kann aber auch mit noch stärker angereichertem Gemisch erfolgen. Nach der Spülfunktion wird der Lambdasollwert wieder auf stöchiometrischen Betrieb eingeregelt.

Das Verfahren ermöglicht vorteilhafterweise auch die Manipulationsursache festzustellen oder zumindest eingrenzen zu können. Wenn der Gradient des Sensorwertes des Abgassensors 70 zum Zeitpunkt t2' den Schwellwert C1 nicht überschritten hat, kann von der Steuereinrichtung 10 festgestellt werden, dass das Schutzrohr des Sensors manipuliert worden ist, wodurch das Abgas verzögert am Abgassensor 70 ankommt. Wenn hingegen von der Steuereinrichtung 10 festgestellt wird, dass der Schwellwert C1 überhaupt nicht überschritten wird, ist dies ein Hinweis darauf, dass der Abgassensor 70 manipuliert wurde oder defekt ist. Der Abgassensor 70 kann in diesem Fall zum Beispiel durch einen NOx-Emulator, welcher die Werte des Abgassensors halbiert, manipuliert sein.

Um den Emissionseinfluss gering zu halten, kann die Funktion zum Verifizieren des Manipulationsverdachts auch zeitgesteuert durchgeführt werden. Dabei werden die NOx-Emissionen in mg/s berechnet und integriert. Der Verfahrensablauf ist zunächst bis zum Verfahrensschritt S25 gleich dem in Figur 4 skizzierten Ablauf. Im Verfahrensschritt S26 wird die NOx Emission ab dem Zeitpunkt t1' integriert und zum Zeitpunkt t2' ausgewertet. Eine NOx-Emission kann in mg/s anhand der Abgasmasse und der NOx-Konzentration in ppm berechnet werden.

Ab dem Zeitpunkt t1' erfolgt die Bildung eines Integrals der Stickstoffoxidemission. Insbesondere ermittelt die Steuereinrichtung 10 ein Integral über einen Verlauf der NOx-Emission zwischen dem Zeitpunkt t1' und dem nachfolgenden Zeitpunkt t2'. In dem Verfahrensschritt S27 wird von der Steuereinrichtung geprüft, ob der Wert des Integrals zum Zeitpunkt t2' größer einem Schwellwert C2 ist. Wenn von der Steuereinrichtung 10 festgestellt wird, dass der Wert des Integrals über dem Schwellwert C2 liegt, wird im Verfahrensschritt S28 keine Manipulation des Abgassensors festgestellt. Wenn hingegen von der Steuereinrichtung 10 festgestellt wird, dass der Wert des Integrals unter dem Schwellwert C2 liegt, wird der Manipulationsverdacht von der Steuereinrichtung 10 im Verfahrensschritt S29 verifiziert. Eine Spülfunktion zum Spülen des Katalysators 60 wird gestartet, wenn das Lambdasondensignal nach dem Katalysator einen bestimmten Wert von zum Beispiel λ = 1,2 unterschritten hat oder nach einer definierten Zeitspanne oder nach einem definierten Abgasmassenstromdurchsatz.

Der anhand von Figur 4 und 5 beschriebene Verfahrensablauf zur Realisierung der zweiten Stufe des Verfahrens zum Erkennen einer Manipulation eines Sensorwertes eines Abgas- beziehungsweise Stickoxidsensors führt zu einer Erhöhung der NOx-Emission. Eine alternative Methode, falls nur der Verdacht der Manipulation des NOx-Sensorsignals vorliegt, besteht darin, zum Zeitpunkt t1' das Ausräumen des Katalysators stärker als erforderlich auszuführen. Dies bedeutet, dass eine Spülfunktion für den Katalysator ausgeführt wird, obwohl der Sauerstoff im Katalysator bereits aufgebraucht ist.

Wird der Katalysator mit geleertem Sauerstoffspeicher im fetten Betriebsbereich betrieben, entsteht sowohl nach dem Schubabschneiden als auch im normalen Motorbetrieb Ammoniak (NH3). Die NH3-Konzentration ist dabei vom Lambda, der Temperatur und des Alterungszustandes des Katalysators abhängig. Die Maximalkonzentration ist bei etwa λ = 0,95 und fällt zu λ = 1 kontinuierlich ab. Im mageren Betrieb wird kein NH3 erzeugt.

Der NOx-Abgassensor hat eine Querempfindlichkeit zu NH3, welche auch zur NH3-Emissionsberechnung verwendet wird. Wird nun der Katalysator in einem Betriebsbereich betrieben, indem NH3 entsteht, muss auch der Abgassensor 70 diese Konzentration anzeigen. Wenn der Sensorwert des NOx-Sensorsignals höher als ein bestimmter Schwellwert, zum Beispiel 50 ppm, beträgt, kann davon ausgegangen werden, dass der Abgassensor nicht manipuliert worden ist.

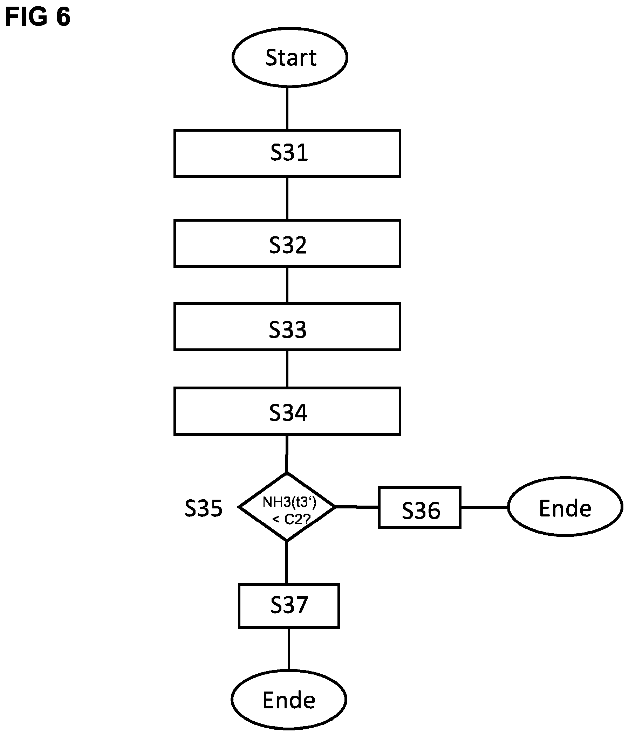

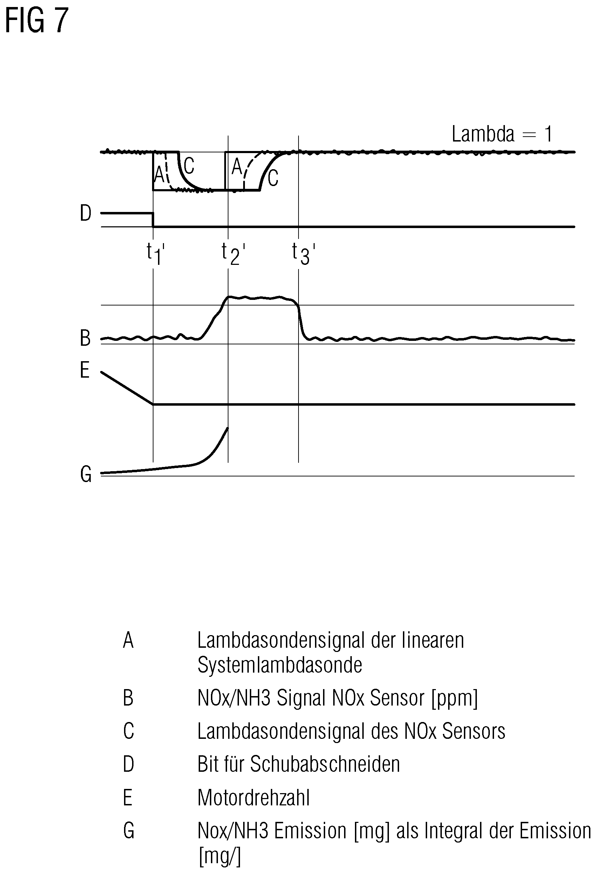

Eine Verfahrensvariante zur Realisierung der zweiten Stufe des Verfahrens, bei der die NH3-Emission zum Verifizieren des Manipulationsverdachts der Sensorwerte des Abgassensors 70 ausgewertet wird, wird im Folgenden anhand des in Figur 6 skizzierten Verfahrensablaufs und der in Figur 7 dargestellten Signalverläufen erläutert.

In dem Verfahrensschritt S31 wird der Schubabschneidebetrieb der Brennkraftmaschine zu dem Zeitpunkt t1' nach dem Zeitpunkt t5 beziehungsweise t6 (Figur 3) beendet. Im Gegensatz zu dem in Figur 4 skizzierten Verfahrensablauf, bei dem das Ausräumen des Katalysators 60 verzögert wird, wird bei dem in Figur 6 skizzierten Verfahren im Verfahrensschritt S32 das Ausräumen des Katalysators 60 verstärkt. Dies kann dadurch erfolgen, indem der Katalysator 60 für eine Zeitdauer, die größer als eine notwendige Zeitdauer zum Verbrauchen des in dem Katalysator vorhandenen Sauerstoffs ist, ausgeräumt wird.

Im Verfahrensschritt S33 wird die Brennkraftmaschine 1 mit einem fetten Verbrennungsluftverhältnis nach dem Zeitpunkt t1' betrieben.

Im Verfahrensschritt S34 wird ein Sensorwert NH3(t3') zu dem Zeitpunkt t3' nach dem Zeitpunkt t1' gemessen. Im Unterschied zu dem in Figur 4 skizzierten Verfahren, bei dem die Stickoxidkonzentration NOx gemessen wird, wird bei dem in Figur 6 skizzierten Verfahrensablauf die Querempfindlichkeit des Abgassensors 70 zu NH3 ausgenutzt und zu dem Zeitpunkt t3' somit die NH3-Konzentration im Abgas als Sensorwert NH3(t3') gemessen.

Im Verfahrensschritt S35 wird von der Steuereinrichtung 10 überprüft, ob der gemessene Sensorwert NH3(t3'), das heißt die NH3-Konzentration zum Zeitpunkt t3', kleiner als ein Schwellwert C2 ist. Wenn von der Steuereinrichtung 10 festgestellt wird, dass der Sensorwert NH3(t3') nicht unterhalb des Schwellwertes C2 liegt beziehungsweise über dem Schwellwert C2 liegt, wird der Manipulationsverdacht von der Steuereinrichtung 10 im Verfahrensschritt S36 nicht verifiziert. Wenn hingegen im Verfahrensschritt S35 von der Steuereinrichtung 10 festgestellt wird, dass der Sensorwert NH3(t3') unter dem Schwellwert C2 liegt, wird der Manipulationsverdacht im Verfahrensschritt S37 von der Steuereinrichtung 10 verifiziert.

Ähnlich wie bei der weiter oben erläuterten ersten Ausführungsform der zweiten Stufe des Verfahrens, bei die Nox-Emission zum Überprüfen des Manipulationsverdachts mittels eines Integrals ausgewertet wird, kann auch bei der Verfahrensvariante der Figuren 6 und 7 ein Integral des NH3-Sensorwertes ausgewertet werden. Wie in Figur 7 (Kurvenverlauf G) skizziert ist, wird bei dieser Verfahrensvariante das Integral der NH3-Emission ab dem Zeitpunkt t1' bis zum Zeitpunkt t2' ausgewertet. Wenn von der Steuereinrichtung 10 festgestellt wird, dass der Wert des Integrals der NH3-Emission über einem Schwellwert C2 liegt, wird von der Steuereinrichtung 10 keine Manipulation des Abgassensors festgestellt. Wenn hingegen von der Steuereinrichtung 10 festgestellt wird, dass der Wert des NH3-Integrals unter dem Schwellwert C2 liegt, wird der Manipulationsverdacht von der Steuereinrichtung 10 verifiziert.

## Patentansprüche

1. Verfahren zum Erkennen einer Manipulation eines Sensorwertes eines Abgassensors einer Brennkraftmaschine für ein Fahrzeug, wobei die Brennkraftmaschine (1) eine Steuereinrichtung (10) zum Steuern der Brennkraftmaschine, einen Einlasstrakt (20) mit einer Drosselklappe (30), eine mit dem Einlasstrakt fluidverbundene Verbrennungskammer (40), und einen mit der Verbrennungskammer fluidverbundenen Abgastrakt (50) mit einem Katalysator (60) aufweist, wobei der Abgassensor (70) in dem Abgastrakt (50) stromabwärts zu dem Katalysator (60) angeordnet ist, wobei das Verfahren die folgenden Schritte aufweist:
- Betreiben der Brennkraftmaschine (1) in einem Schubabschneidebetrieb,
- Ermitteln eines ersten Sensorwertes (ΔNox) des Abgassensors (70) bei geschlossener Drosselklappe (30),
- Feststellen eines Manipulationsverdachts durch die Steuereinrichtung (10) durch Auswerten des ersten Sensorwertes (ΔNox) in Abhängigkeit von einem ersten Schwellwert (C1),
- Verifizieren des Manipulationsverdachts durch die Steuereinrichtung (10) durch Messen eines zweiten Sensorwertes (Nox(t2'), NH3(t2'), Nox(t3'), NH3(t3')) des Abgassensors (70) bei einer Emissionserhöhung der Brennkraftmaschine (1) und durch Auswerten des zweiten Sensorwertes (Nox(t2'), NH3(t2'), Nox(t3'), NH3(t3')) in Abhängigkeit von einem zweiten Schwellwert (C2), wenn zuvor der Manipulationsverdacht festgestellt worden ist.

2. Verfahren nach Anspruch 1, umfassend die folgenden Schritte:
- Kalibrieren eines Nullpunktes des Abgassensors (70) nach dem Betreiben der Brennkraftmaschine (1) in dem Schubabschneidebetrieb,
- Ermitteln des ersten Sensorwertes (ΔNox) in Abhängigkeit von der Kalibrierung des Nullpunktes des Abgassensors (70).

3. Verfahren nach Anspruch 2,
wobei zum Kalibrieren des Nullpunktes des Abgassensors (70) die folgenden Schritte durchgeführt werden:
- Öffnen der Drosselklappe (30),
- Ermitteln eines dritten Sensorwertes (Nox(t2-t1)) nach einem ersten Zeitpunkt (t1) nach dem Öffnen der Drosselklappe (30).

4. Verfahren nach Anspruch 3, umfassend den folgenden Schritt:
Ermitteln des dritten Sensorwertes (Nox(t2-t1)) durch Berechnen eines Mittelwertes der Sensorwerte des Abgassensors (70) zwischen dem ersten Zeitpunkt (t1) und einem zweiten Zeitpunkt (t2) nach dem ersten Zeitpunkt (t1).

5. Verfahren nach einem der Ansprüche 1 bis 4,
wobei zum Ermitteln des ersten Sensorwertes (ΔNox) des Abgassensors (70) die folgenden Schritte durchgeführt werden:
- Schließen der Drosselklappe (30) zu einem dritten Zeitpunkt (t3) nach dem zweiten Zeitpunkt (t2),
- Ermitteln eines vierten Sensorwertes (Nox(t4-t5)) nach einer Zeitdauer nach dem Schließen der Drosselklappe (30).

6. Verfahren nach Anspruch 5, umfassend den folgenden Schritt:
Ermitteln des vierten Sensorwertes (Nox(t4-t5)) durch Berechnen eines Mittelwertes der Sensorwerte des Abgassensors (70) zwischen einem vierten Zeitpunkt (t4) nach dem dritten Zeitpunkt (t3) und einem fünften Zeitpunkt (t5) nach dem vierten Zeitpunkt (t4).

7. Verfahren nach einem der Ansprüche 5 oder 6,
wobei der erste Sensorwert (ΔNox) durch Berechnen einer Differenz zwischen dem vierten Sensorwert (Nox(t4-t5)) und dem dritten Sensorwert (Nox(t2-t1)) ermittelt wird.

8. Verfahren nach einem der Ansprüche 1 bis 7
wobei der Manipulationsverdacht durch die Steuereinrichtung (10) festgestellt wird, wenn von der Steuereinrichtung (10) ermittelt wird, dass der erste Sensorwert (ΔNox) unter dem ersten Schwellwert (C1) liegt.

9. Verfahren nach einem der Ansprüche 1 bis 8,
wobei zum Verifizieren des Manipulationsverdachts die folgenden Schritte ausgeführt werden:
- Beenden des Schubabschneidebetriebs der Brennkraftmaschine (1) zu einem sechsten Zeitpunkt (t1') nach dem fünften Zeitpunkt (t5),
- Betreiben der Brennkraftmaschine (1) mit einem magerem Verbrennungsluftverhältnis nach dem sechsten Zeitpunkt (t1'),
- Messen des zweiten Sensorwertes (Nox(t3')) zu einem siebten Zeitpunkt (t3') nach dem sechsten Zeitpunkt (t1'),
- Verifizieren des Manipulationsverdachts, wenn von der Steuereinrichtung (10) festgestellt wird, dass der zweite Sensorwert (Nox(t3')) unter dem zweiten Schwellwert (C2) liegt.

10. Verfahren nach einem der Ansprüche 1 bis 8,
wobei zum Verifizieren des Manipulationsverdachts die folgenden Schritte ausgeführt werden:
- Beenden des Schubabschneidebetriebs der Brennkraftmaschine (1) zu einem sechsten Zeitpunkt (t1') nach dem fünften Zeitpunkt (t5),
- Betreiben der Brennkraftmaschine (1) mit einem magerem Verbrennungsluftverhältnis nach dem sechsten Zeitpunkt (t1'),
- Messen des zweiten Sensorwertes (Nox(t2')) ab einem siebten Zeitpunkt (t2') nach dem sechsten Zeitpunkt (t1') und Ermitteln eines Integrals über einen Verlauf des zweiten Sensorwertes zwischen dem sechsten Zeitpunkt (t1') und dem siebten Zeitpunkt (t2'),
- Verifizieren des Manipulationsverdachts, wenn von der Steuereinrichtung (10) festgestellt wird, dass ein Wert des Integrals unter dem zweiten Schwellwert (C2) liegt.

11. Verfahren nach einem der Ansprüche 1 bis 10,
wobei der zweite Sensorwert eine Stickstoffkonzentration in dem Abgastrakt (50) angibt.

12. Verfahren nach einem der Ansprüche 1 bis 11,
wobei ein Ausräumen des Katalysators (60) nach dem Beenden des Schubabschneidens verzögert wird, bis das Verifizieren des Manipulationsverdachts beendet ist.

13. Verfahren nach einem der Ansprüche 1 bis 8,
wobei zum Verifizieren des Manipulationsverdachts die folgenden Schritte ausgeführt werden:
- Beenden des Schubabschneidebetriebs der Brennkraftmaschine (1) zu einem sechsten Zeitpunkt (t1') nach dem fünften Zeitpunkt (t5),
- Ausräumen des Katalysators (60) durch Spülen des Katalysators für eine Zeitdauer, die größer ist als eine notwendige Zeitdauer zum Verbrauchen des in dem Katalysator vorhandenen Sauerstoffs,
- Betreiben der Brennkraftmaschine (1) mit einem fetten Verbrennungsluftverhältnis nach dem sechsten Zeitpunkt (t1'),
- Messen des zweiten Sensorwertes (NH3(t3')) zu einem siebten Zeitpunkt (t3') nach dem sechsten Zeitpunkt (t1'),
- Verifizieren des Manipulationsverdachts, wenn von der Steuereinrichtung (10) festgestellt wird, dass der zweite Sensorwert (NH3(t3')) unter dem zweiten Schwellwert (C2) liegt.

14. Verfahren nach einem der Ansprüche 1 bis 8 oder 13,
wobei der zweite Sensorwert eine Ammoniakkonzentration in dem Abgastrakt (50) angibt.

15. Brennkraftmaschine für ein Fahrzeug mit Erkennen einer Manipulation eines Sensorwertes eines Abgassensors, umfassend:
- eine Steuereinrichtung (10) zum Steuern der Brennkraftmaschine (1),
- einen Einlasstrakt (20) mit einer Drosselklappe, (30)
- eine mit dem Einlasstrakt fluidverbundene Verbrennungskammer (40),
- einen mit der Verbrennungskammer (40) fluidverbundenen Abgastrakt (50) mit einem Katalysator (60),
- wobei der Abgassensor (70) in dem Abgastrakt (50) stromabwärts zu dem Katalysator (60) angeordnet ist,
- wobei die Steuereinrichtung (10) dazu ausgebildet ist, ein Verfahren zum Erkennen einer Manipulation eines Sensorwertes des Abgassensors (70) nach einem der Ansprüche 1 bis 14 durchzuführen.

## Claims

1. Method for detecting a manipulation of a sensor value from an exhaust gas sensor of an internal combustion engine for a vehicle, wherein the internal combustion engine (1) comprises a control device (10) for controlling the internal combustion engine, an inlet tract (20) with a throttle valve (30), a combustion chamber (40) fluid-connected to the inlet tract, and an exhaust gas tract (50) fluid-connected to the combustion chamber and with a catalytic converter (60), wherein the exhaust gas sensor (70) is arranged in the exhaust gas tract (50) downstream of the catalytic converter (60), the method comprising the following steps:
- operating the internal combustion engine (1) in an overrun cutoff mode,
- determining a first sensor value (ΔNox) from the exhaust gas sensor (70) with the throttle valve (30) closed,
- establishing a suspected manipulation by the control device (10) by evaluating the first sensor value (ΔNox) as a function of a first threshold value (C1),
- verifying the suspected manipulation by the control device (10) by measuring a second sensor value (Nox(t2'), NH3(t2'), Nox(t3'), NH3(t3')) from the exhaust gas sensor (70) in the event of an increase in the emissions of the internal combustion engine (1) and by evaluating the second sensor value (Nox(t2'), NH3(t2'), Nox(t3'), NH3(t3')) as a function of a second threshold value (C2), if the suspected manipulation has previously been established.

2. Method according to Claim 1, comprising the following steps:
- calibrating a zero point of the exhaust gas sensor (70) after operation of the internal combustion engine (1) in the overrun cutoff mode,
- determining the first sensor value (ΔNox) as a function of the calibration of the zero point of the exhaust gas sensor (70).

3. Method according to Claim 2,
wherein to calibrate the zero point of the exhaust gas sensor (70), the following steps are performed:
- opening the throttle valve (30),
- determining a third sensor value (Nox(t2-t1)) after a first time (t1) after the opening of the throttle valve (30).

4. Method according to Claim 3, comprising the following step:
determining the third sensor value (Nox(t2-t1)) by calculating an average of the sensor values from the exhaust gas sensor (70) between the first time (t1) and a second time (t2) after the first time (t1).

5. Method according to any of Claims 1 to 4,
wherein to determine the first sensor value (ΔNox) from the exhaust gas sensor (70), the following steps are performed:
- closing the throttle valve (30) at a third time (t3) after the second time (t2),
- determining a fourth sensor value (Nox(t4-t5)) after a period of time after the closing of the throttle valve (30).

6. Method according to Claim 5, comprising the following step:
determining the fourth sensor value (Nox(t4-t5)) by calculating an average of the sensor values from the exhaust gas sensor (70) between a fourth time (t4) after the third time (t3) and a fifth time (t5) after the fourth time (t4).

7. Method according to either of Claims 5 and 6,
wherein the first sensor value (ΔNox) is determined by calculating a difference between the fourth sensor value (Nox(t4-t5)) and the third sensor value (Nox(t2-t1)).

8. Method according to any of Claims 1 to 7,
wherein the suspected manipulation is established by the control device (10) if the control device (10) determines that the first sensor value (ΔNox) is below the first threshold value (C1).

9. Method according to any of Claims 1 to 8,
wherein to verify the suspected manipulation, the following steps are executed:
- ending the overrun cutoff mode of the internal combustion engine (1) at a sixth time (t1') after the fifth time (t5),
- operating the internal combustion engine (1) with a lean combustion air ratio after the sixth time (t1'),
- measuring the second sensor value (Nox(t3')) at a seventh time (t3') after the sixth time (t1'),
- verifying the suspected manipulation if the control device (10) establishes that the second sensor value (Nox(t3')) is below the second threshold value (C2).

10. Method according to any of Claims 1 to 8,
wherein to verify the suspected manipulation, the following steps are executed:
- ending the overrun cutoff mode of the internal combustion engine (1) at a sixth time (t1') after the fifth time (t5),
- operating the internal combustion engine (1) with a lean combustion air ratio after the sixth time (t1'),
- measuring the second sensor value (Nox(t2')) from a seventh time (t2') after the sixth time (t1') and determining an integral over a course of the second sensor value between the sixth time (t1') and the seventh time (t2'),
- verifying the suspected manipulation if the control device (10) establishes that a value of the integral is below the second threshold value (C2).

11. Method according to any of Claims 1 to 10,
wherein the second sensor value indicates a nitrogen concentration in the exhaust gas tract (50).

12. Method according to any of Claims 1 to 11,
wherein clearance of the catalytic converter (60) after the ending of overrun cutoff is delayed until the verification of the suspected manipulation is at an end.

13. Method according to any of Claims 1 to 8,
wherein to verify the suspected manipulation, the following steps are executed:
- ending the overrun cutoff mode of the internal combustion engine (1) at a sixth time (t1') after the fifth time (t5),
- clearing the catalytic converter (60) by purging the catalytic converter for a period of time greater than a period of time necessary to consume the oxygen present in the catalytic converter,
- operating the internal combustion engine (1) with a rich combustion air ratio after the sixth time (t1'),
- measuring the second sensor value (NH3(t3')) at a seventh time (t3') after the sixth time (t1'),
- verifying the suspected manipulation if the control device (10) establishes that the second sensor value (NH3(t3')) is below the second threshold value (C2).

14. Method according to any of Claims 1 to 8 or 13,
wherein the second sensor value indicates an ammonia concentration in the exhaust gas tract (50).

15. Internal combustion engine for a vehicle with detection of a manipulation of a sensor value from an exhaust gas sensor, comprising:
- a control device (10) for controlling the internal combustion engine (1),
- an inlet tract (20) with a throttle valve (30),
- a combustion chamber (40) fluid-connected to the inlet tract,
- an exhaust gas tract (50) fluid-connected to the combustion chamber (40) and with a catalytic converter (60),
- wherein the exhaust gas sensor (70) is arranged in the exhaust gas tract (50) downstream of the catalytic converter (60),
- wherein the control device (10) is embodied to perform a method for detecting a manipulation of a sensor value from the exhaust gas sensor (70) according to any of Claims 1 to 14.

## Revendications

1. Procédé pour détecter une manipulation d'une valeur de capteur d'un capteur de gaz d'échappement d'un moteur à combustion interne pour un véhicule, dans lequel le moteur à combustion interne (1) comporte un dispositif de commande (10) pour commander le moteur à combustion interne, une conduite d'admission (20) comportant un papillon des gaz (30), une chambre de combustion (40) reliée fluidiquement à la conduite d'admission, et une conduite d'échappement (50) reliée fluidiquement à la chambre de combustion et comportant un catalyseur (60), le capteur de gaz d'échappement (70) étant disposé dans la conduite d'échappement (50) en aval du catalyseur (60), le procédé comprenant les étapes suivantes :
- fonctionnement du moteur à combustion interne (1) en mode de coupure de surrégime,
- détermination d'une première valeur de capteur (ΔNox) du capteur de gaz d'échappement (70) lorsque le papillon des gaz (30) est fermé,
- constatation d'une suspicion de manipulation par le dispositif de commande (10) par évaluation de la première valeur de capteur (ΔNox) en fonction d'une première valeur seuil (C1),
- vérification de la suspicion de manipulation par le dispositif de commande (10) par mesure d'une deuxième valeur de capteur (Nox(t2'), NH3(t2'), Nox(t3'), NH3(t3')) du capteur de gaz d'échappement (70) lors d'une augmentation des émissions du moteur à combustion interne (1) et par évaluation de la deuxième valeur de capteur (Nox(t2'), NH3(t2'), Nox(t3'), NH3(t3')) en fonction d'une deuxième valeur seuil (C2), si la suspicion de manipulation a été établie au préalable.

2. Procédé selon la revendication 1, comprenant les étapes suivantes :
- étalonnage d'un point zéro du capteur de gaz d'échappement (70) après que le moteur à combustion interne (1) a fonctionné en mode de coupure de surrégime,
- détermination de la première valeur de capteur (ΔNox) en fonction de l'étalonnage du point zéro du capteur de gaz d'échappement (70).

3. Procédé selon la revendication 2,
dans lequel les étapes suivantes sont effectuées pour étalonner le point zéro du capteur de gaz d'échappement (70) :
- ouverture du papillon des gaz (30),
- détermination d'une troisième valeur de capteur (Nox(t2-t1)) après un premier instant (t1) consécutif à l'ouverture du papillon des gaz (30).

4. Procédé selon la revendication 3, comprenant l'étape suivante :
détermination de la troisième valeur de capteur (Nox(t2-t1)) par calcul d'une valeur moyenne des valeurs de capteur du capteur de gaz d'échappement (70) entre le premier instant (t1) et un deuxième instant (t2) consécutif au premier instant (t1).

5. Procédé selon l'une quelconque des revendications 1 à 4,
dans lequel, pour déterminer la première valeur de capteur (ΔNox) du capteur de gaz d'échappement (70), les étapes suivantes sont effectuées :
- fermeture du papillon des gaz (30) à un troisième instant (t3) consécutif au deuxième instant (t2),
- détermination d'une quatrième valeur de capteur (Nox(t4-t5)) après un certaine durée consécutive à la fermeture du papillon des gaz (30).

6. Procédé selon la revendication 5, comprenant l'étape suivante :
détermination de la quatrième valeur de capteur (Nox(t4-t5)) par calcul d'une valeur moyenne des valeurs de capteur du capteur de gaz d'échappement (70) entre un quatrième instant (t4) consécutif au troisième instant (t3) et un cinquième instant (t5) consécutif au quatrième instant (t4).

7. Procédé selon l'une quelconque des revendications 5 et 6,
dans lequel la première valeur de capteur (ΔNox) est déterminée par calcul d'une différence entre la quatrième valeur de capteur (Nox(t4-t5)) et la troisième valeur de capteur (Nox(t2-t1)).

8. Procédé selon l'une quelconque des revendications 1 à 7,
dans lequel la suspicion de manipulation est déterminée par le dispositif de commande (10), s'il est déterminé par le dispositif de commande (10) que la première valeur de capteur (ΔNox) est inférieure à la première valeur seuil (C1).

9. Procédé selon l'une quelconque des revendications 1 à 8,
dans lequel, pour vérifier la suspicion de manipulation, les étapes suivantes sont effectuées :
- interruption du mode de coupure de surrégime du moteur à combustion interne (1) à un sixième instant (t1') consécutif au cinquième instant (t5),
- fonctionnement du moteur à combustion interne (1) avec un rapport d'air de combustion appauvri après le sixième instant (t1'),
- mesure de la deuxième valeur de capteur (Nox(t3')) à un septième instant (t3') consécutif au sixième instant (t1'),
- vérification de la suspicion de manipulation, si le dispositif de commande (10) détermine que la deuxième valeur de capteur (Nox(t3')) est inférieure à la deuxième valeur seuil (C2).

10. Procédé selon l'une quelconque des revendications 1 à 8,
dans lequel, pour vérifier la suspicion de manipulation, les étapes suivantes sont effectuées :
- interruption du mode de coupure de surrégime du moteur à combustion interne (1) à un sixième instant (t1') consécutif au cinquième instant (t5),
- fonctionnement du moteur à combustion interne (1) avec un rapport d'air de combustion appauvri après le sixième instant (t1'),
- mesure de la deuxième valeur de capteur (Nox(t2')) à partir d'un septième instant (t2') consécutif au sixième instant (t1') et détermination d'une intégrale sur un profil de la deuxième valeur de capteur entre le sixième instant (t1') et le septième instant (t2'),
- vérification de la suspicion de manipulation, si le dispositif de commande (10) détermine qu'une valeur de l'intégrale est inférieure à la deuxième valeur seuil (C2).

11. Procédé selon l'une quelconque des revendications 1 à 10,
dans lequel la deuxième valeur de capteur indique une concentration d'azote dans la conduite d'échappement (50).

12. Procédé selon l'une quelconque des revendications 1 à 11,
dans lequel un retrait du catalyseur (60) après la fin du mode de coupure de surrégime est retardé jusqu'à ce que la vérification de la suspicion de manipulation soit terminée.

13. Procédé selon l'une quelconque des revendications 1 à 8,
dans lequel, pour vérifier la suspicion de manipulation, les étapes suivantes sont effectuées :
- interruption du mode de coupure de surrégime du moteur à combustion interne (1) à un sixième instant (t1') consécutif au cinquième instant (t5),
- retrait du catalyseur (60) par purge du catalyseur pendant une durée supérieure à une durée nécessaire à la consommation de l'oxygène présent dans le catalyseur,
- fonctionnement du moteur à combustion interne (1) avec un rapport d'air de combustion riche après le sixième instant (t1'),
- mesure de la deuxième valeur de capteur (NH3(t3')) à un septième instant (t3') consécutif au sixième instant (t1'),
- vérification de la suspicion de manipulation, si le dispositif de commande (10) détermine que la deuxième valeur de capteur (NH3(t3')) est inférieure à la deuxième valeur seuil (C2).

14. Procédé selon l'une quelconque des revendications 1 à 8 ou 13,
dans lequel la deuxième valeur de capteur indique une concentration d'ammoniac dans la conduite d'échappement (50).

15. Moteur à combustion interne pour un véhicule avec détection d'une manipulation d'une valeur de capteur d'un capteur de gaz d'échappement, comprenant :
- un dispositif de commande (10) pour commander le moteur à combustion interne (1),
- une conduite d'admission (20) comportant un papillon des gaz (30)
- une chambre de combustion (40) en communication fluidique avec la conduite d'admission,
- une conduite d'échappement (50) reliée fluidiquement à la chambre de combustion (40) et comportant un catalyseur (60),
- le capteur de gaz d'échappement (70) étant disposé dans la conduite de gaz d'échappement (50) en aval du catalyseur (60),
- dans lequel le dispositif de commande (10) est conçu pour mettre en œuvre un procédé pour détecter une manipulation d'une valeur de capteur du capteur de gaz d'échappement (70) selon l'une quelconque des revendications 1 à 14.
